# EUROPEAN PATENT SPECIFICATION

(11) **EP 3 526 511 B1**
(45) Date of publication and mention of the grant of the patent: **12.06.2024**
(21) Application number: 17859848.8
(22) Date of filing: 12.10.2017
(51) Int. Cl.: F16P 1/00, B60J 1/00, E02F 9/16, B60J 1/06

(54) **MULTI-LAYER PROTECTIVE WINDOW SYSTEM FOR NON-MILITARY HEAVY EQUIPMENT AND METHOD FOR FABRICATING SAME**
MEHRSCHICHTIGES SCHUTZFENSTERSYSTEM FÜR NICHTMILITÄRISCHE SCHWERE AUSRÜSTUNG UND VERFAHREN ZUR HERSTELLUNG DAVON
SYSTÈME DE FENÊTRE DE PROTECTION MULTICOUCHE POUR ÉQUIPEMENT LOURD NON MILITAIRE ET SON PROCÉDÉ DE FABRICATION

(30) Priority: 12.10.2016 US 201662407220 P
(43) Date of publication of application: 21.08.2019
(73) Proprietor: Tigercat Industries Inc., Brantford, Ontario N3R 7J7 (CA)
(72) Inventor: COOPER, Jonathan, Craig, Brantford Ontario N3R 7J7 (CA)
(74) Representative: Wynne-Jones IP Limited
(86) International application number: PCT/CA2017/051212
(87) International publication number: WO 2018/068141

(56) References cited:
- EP-A1- 0 089 850
- EP-A1- 2 667 143
- DE-A1- 3 430 824
- DE-A1- 4 038 415
- DE-A1-102009 030 057
- FR-A1- 2 684 131
- GB-A- 1 522 075
- US-A1- 2010 186 641
- US-A1- 2014 026 502

## Description

### Field

The embodiments disclosed herein relate to a multi-layer protective window system for non-military heavy equipment and a method for fabricating the same. More particularly, the embodiments herein relate to a protective window for forestry equipment that is intended to protect against chain shot.

### Background

Current heavy equipment and, in particular, forestry equipment, includes curved window designs for operators to view the work area in order to operate tools provided to the heavy equipment.

Due to debris and moving equipment in the work environment where heavy equipment is used, impacts on the windows can be fairly common. Impacts on the windows can be a danger to the operators. As such, the windows tend to be quite thick and made from stronger materials such as polycarbonate and the like. In some cases, tempered glass may be used but tempered glass is generally not as strong as polycarbonate and may not be appropriate for various applications.

However, as the material used becomes thicker, it is more and more difficult and costly to form the material into a curved shape for a window. For example, in the forestry industry, curved window designs typically have a maximum 15mm in total thickness of polycarbonate window because the cost of forming thicker materials is too high.

Further, heavy equipment tends to be used in fairly dirty environments ranging from quite hot to quite cold and this can lead to difficulties in keeping the windows clean and free from frost or condensation. EP0089850 discloses a method of heating cabs of industrial vehicles used in cold environments in which heated air is driven through at least one window space defined between a pair of generally parallel spaced transparent window panes before entering the cab. Also disclosed is an industrial vehicle for use in cold environments comprising a cab with windows on at least three sides, an air inlet, and an air outlet, the windows having generally parallel spaced inner and outer panes with the interior space vented to the interior of the cab, and means for forcing heated air through the window spaces between the inner and outer panes before entering the cab. DE3430824A1 discloses a vehicle window to be able to exert an influence on the light and heat rays passing through the window. It is proposed to assign the window a cavity essentially adapted to the window pane. With the aid of the cavity (filled with adsorbing media) or with the aid of the walls (polarised, displaceable in relation to one another) forming the cavity, the light and heat permeability can be influenced.

As such, there is a need for an improved protective window for heavy equipment and, in particular, forestry equipment.

### Summary

According to one aspect herein, there is provided a protective window system for forestry equipment including at least two window panes of transparent polycarbonate material having a thickness between 10 and 20mm separated by an air gap between 20 and 30 mm, wherein the thickness of each window pane and the size of the air gap is selected such that a larger window pane thickness requires a smaller air gap within the range and the window system meets or exceeds UL/ANSI 752 level 1 testing.

In still further cases, the at least two window panes may include a plurality of window panes.

Further, the air gap may include a plurality of air gaps.

In still further cases, the window system may include a channel for transporting conditioned air and a vent for allowing the conditioned air to enter the air gap.

In yet still further cases, the window system may include a hinge mechanism for allowing at least one of the at least two window panes to move in relation to another of the at least two window panes.

According to another aspect herein, there is provided a method of fabricating a protective window system for forestry equipment, the method including: forming at least two polycarbonate window panes to have a curved shape and a thickness between 10 and 20 mm; mounting a first pane of the at least two window panes on an exterior of a cab of the forestry equipment; mounting another pane of the at least two window panes on an interior of the cab; and providing an air gap between 20 and 30 mm between at least two of the at least two panes, wherein at least one of the first pane and another pane are configured to rotate away from the other to allow for cleaning and wherein the thickness of each window pane and the size of the air gap is selected within the specified ranges such that a larger window pane thickness requires a smaller air gap within the range and the window system meets or exceeds UL/ANSI 752 level 1 testing.

In yet further cases, the at least two window panes may include a plurality of window panes. Further, the air gap may include a plurality of air gaps.

In still yet further cases, the method may include providing a channel for transporting conditioned air and a vent for allowing the conditioned air to enter the air gap.

According to yet another aspect herein, there is provided a protective window system for forestry equipment including: at least two window panes of polycarbonate formed with a curved shape and having a thickness between 10 and 20 mm; an air gap between at least two of the at least two window panes between 20 and 30 mm; a channel for transporting conditioned air and a vent for allowing the conditioned air to enter the air gap; and a hinge mechanism for allowing at least one of the at least two window panes to move in relation to another of the at least two window panes, wherein the thickness of each window pane and the size of the air gap is selected from the specified ranges such that a larger window pane thickness requires a smaller air gap within the range and that the window system meets or exceeds UL/ANSI 752 level 1 testing.

Other aspects and features will become apparent, to those ordinarily skilled in the art, upon review of the following description of some exemplary embodiments.

### Brief Description of the Drawings

Embodiments will now be described, by way of example only, with reference to the attached drawings, in which:
Figure 1 shows an embodiment of a protective window system;
Figure 2 is a side view showing additional detail of a base of the window system of Figure 1;
Figure 3 is a perspective view showing additional detail of a base of the window system of Figure 1, in particular, showing a channel for air flow;
Figure 4 illustrates a configuration where an interior pane has been moved away from an exterior pane to allow for cleaning of each pane on the sides toward an air gap; and
Figure 5 shows a detailed view of an embodiment of a top of the window system of Fig. 1.

### Detailed Description

In many industrial, construction, mining and forestry environments, heavy machinery is operated by users in cabs on the heavy machinery. The cabs typically have windows for the user to be able to see the surrounding environment. However, these environments may have a risk of debris, equipment, materials coming into contact with and damaging the windows and, in some cases, the users. In the particular example of the forestry industry, high powered chain saws are often attached to a boom on a piece of heavy equipment (for example, a harvesting head, processing head, directional felling head, grapple saw or the like). It has recently been determined that when a high powered chain saw has a chain break, the piece of chain that breaks away (called a chain shot) can be directed at the operator cabin (and the window thereof) at very high speeds similar to a 9mm bullet (1140ft/sec). It is also believed that the chain shot can be spinning at speeds in the range of 400,000rpm. Unlike a bullet or other type of projectile, it appears that this high rotational speed can cause the chain shot to penetrate many types of window material even when another type of projectile might not. It is believed that this penetration is due to the friction heat generated when the rotating chain shot first contacts the window material. The friction heat causes melted material that can continue through a pane of, for example, polycarbonate and allow the chain shot to penetrate the window material.

The present document describes embodiments of a window system that is intended to protect against projectiles, including chain shot, by using multiple panes having at least one air gap between adjacent panes. In the present embodiments, the air gap between the panes helps to prevent the melted pool of window material from propagating from a first pane into a second or subsequent panes that is placed after the air gap. In order for the chain shot to penetrate multiple panes, a new heated pool of polycarbonate would need to form in the subsequent pane. However, testing has shown that the rotational energy absorbed in the first pane generally reduces the available energy to melt the material in the second pane.

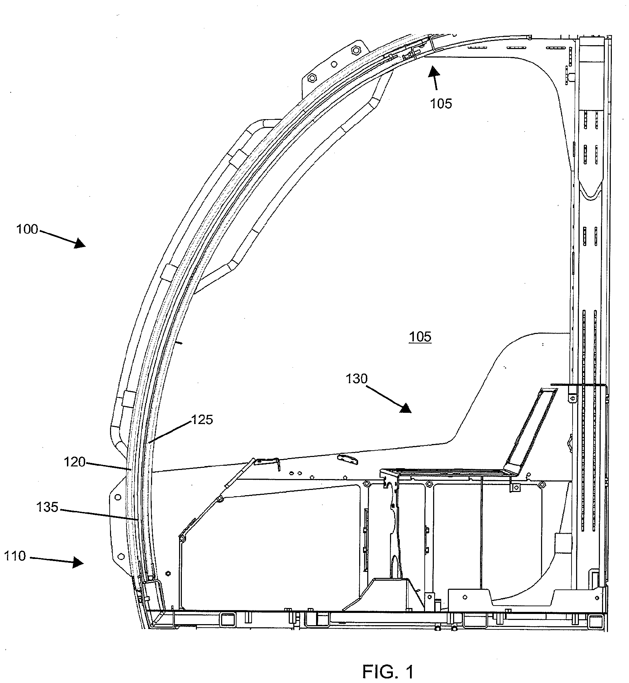

Figure 1 shows an embodiment of a protective window system 100. The window system 100 curves from top 105 to bottom 110 around an operator cab 115 on a piece of heavy equipment (not shown). The window system 100 could also or alternatively be curved along a horizontal direction. As shown in Fig. 1, the example protective window system includes an exterior pane 120 and an interior pane 125 of transparent material placed adjacent to one another between an operator station 130 and the outside of the cab 115. There is an air gap 135 provided between the exterior and interior windows panes 120, 125. In other embodiments, there may also be additional panes (not shown) between the exterior and interior window panes 120, 125, with appropriate air gaps (not shown) therebetween.

The transparent window material will generally be polycarbonate or similar but could also be other suitable materials having similar functionality.

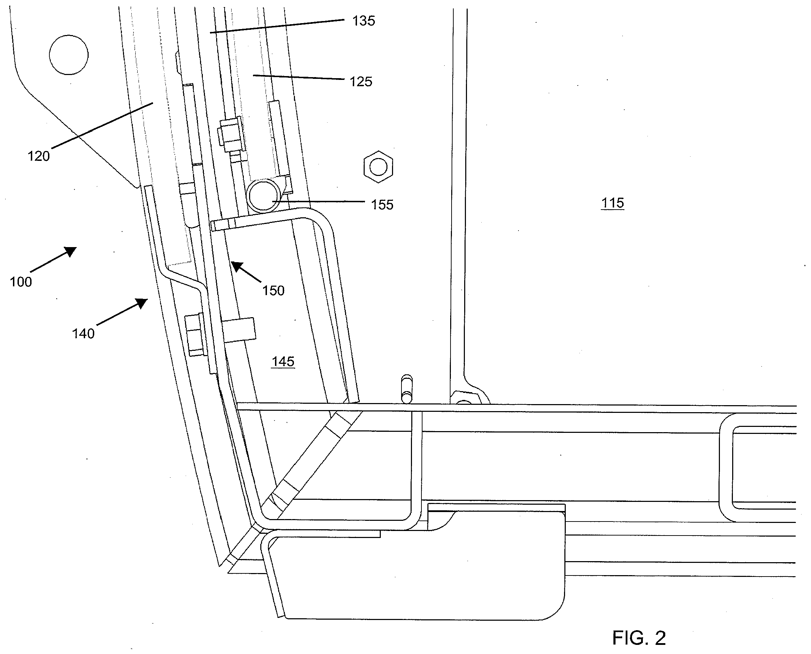

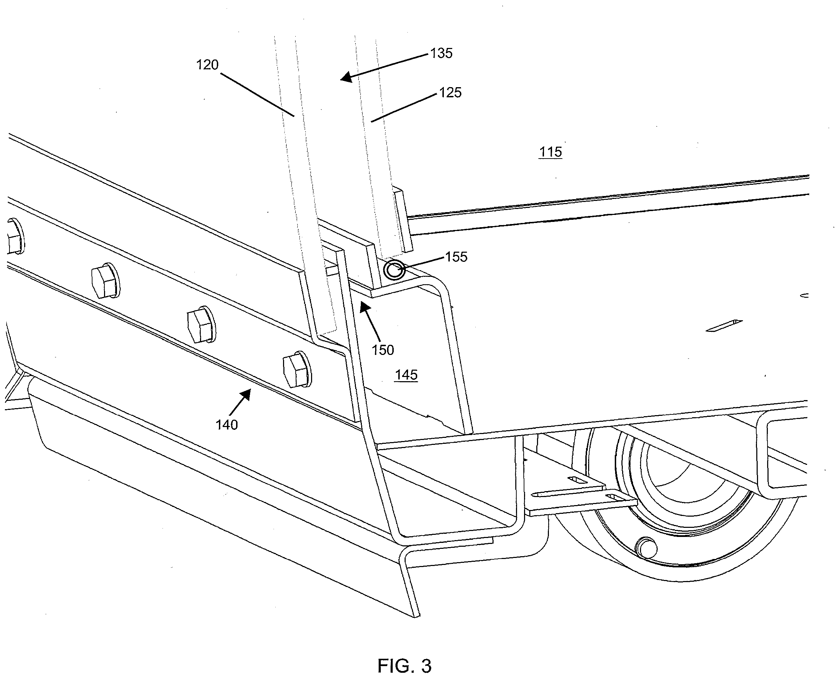

Figures 2 and 3 are views showing additional detail of a base 140 of the window system 100. In Fig. 3, some elements have been removed/simplified. Fig. 2 is a side view and Fig. 3 is a perspective view illustrating a channel 145 through which conditioned air can move below the window panes 120, 125. The channel 145 also includes an opening or vent 150 through which conditioned air enters the air gap 135 between the panes 120, 125. As such, the conditioned air (heated or cooled) can be directed between the panes 120, 125 to defrost the panes 120, 125 in colder climates or prevent condensation in hotter climates. The panes 120, 125 of the window system 100 can be thinner than a monolithic single pane, thereby allowing the heated air to more quickly defrost the multiple panes because thinner material is less insulating than thicker material and conducts heat more quickly.

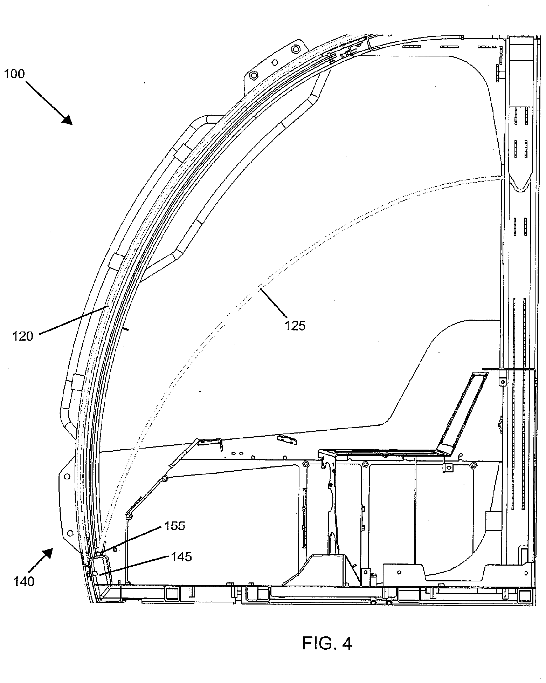

As shown in Figs 2 and 3, the window system 100 also includes a hinge 155 to allow one or more of the panes to rotate in relation to the other panes. In the embodiment shown in Figs. 2 and 3, the hinge 155 is at the lower edge of the interior pane 125. The use of a hinge 155 to mount the interior pane 125 (although either one of the window panes could be hinged) allows access so that the inner sides of the panes may be cleaned more easily. In particular, the hinge 155 on the interior pane 125 allows the interior pane 125 to be moved away from the exterior pane 120 to provide access for cleaning tools to be used to clean between the two panes 120, 125. Figure 4 is an illustration of the interior pane 125 rotated away from the exterior pane 120 to allow for cleaning of each pane on the sides toward the air gap 135.

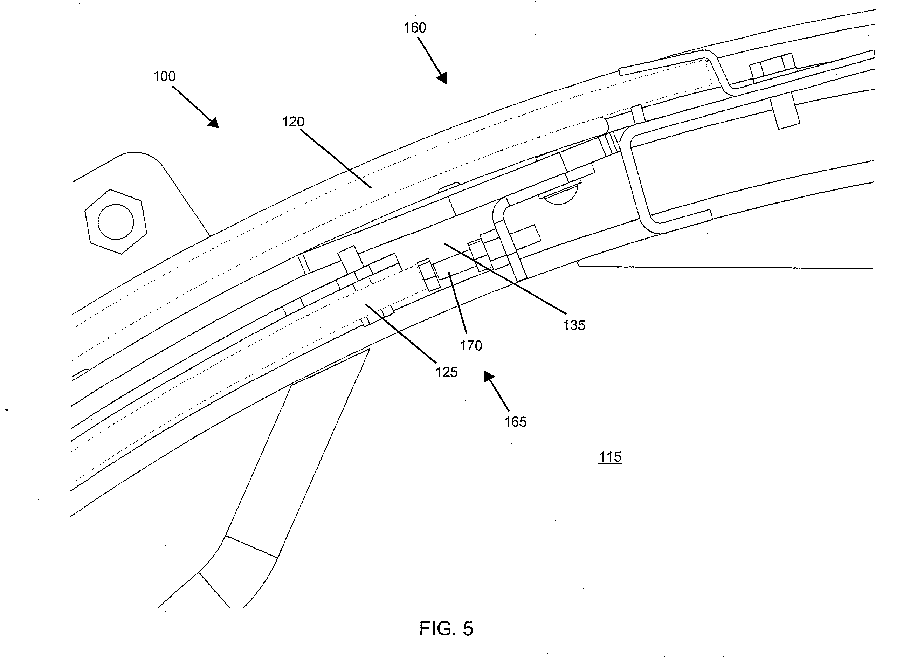

Figure 5 shows a detailed view of the top 160 of the window system 100. In this embodiment, the interior window 125 is supported by a retaining mechanism 165 that can be released to allow the interior window 125 to swing inward on the hinge 155. In particular, the retaining mechanism 165 may be a screw 170 that abuts the interior pane 125 and can be tightened and loosened to retain or release the interior pane 125. Other types of retaining mechanisms may also be used, including catches, clamps, or the like.

The window system 100 is intended to provide greater protection in the event of impacts. For example, in the case of objects that may be thrown at the window by the wind, dropping from height, or being release from another piece of equipment or the like. In the case of any impacts, the air gap 135 between the panes 120, 125 provides a separation between the panes 120, 125. The separation between panes 120, 125 is expected to provide additional protection in that the air gap 135 assists in stopping propagation of cracks initiated in the exterior pane 120 from continuing through the next pane, in this embodiment, the interior pane 125.

In a particular example from the forestry industry, it has been estimated that the thickness of monolithic polycarbonate needed to stop chain shot would be 1.25 inches (31.75 mm). This is estimated to be similar to the size needed to meet UL/ANSI 752 level 1 bullet proof testing. In a test, an embodiment of a dual pane window having two .5 inch (12.7 mm) polycarbonate panes and an air gap of 30 mm was able to pass the UL/ANSI 752 level 1 test.

While embodiments of the improved window system as described herein have not been tested with regard to chain shot as yet, the results of the UL/ANSI test are believed to indicate that the window system will also provide greater protection against chain shot. In particular, the air space between the panes is expected to stop the propagation of the melted pool and prevent a second melted pool from forming in the second pane because the heat of the pool will be reduced/dispersed in the air gap.

In the above embodiment, the focus is on a two-pane window but it will be understood that additional panes and air gaps may also be used. In some multi-pane cases, some panes may be placed adjacent each other without an air gap as long as there is at least one air gap in the window system. Further, the size of the panes described and the air gap between panes has been discussed but suitable sizes can be determined based on the application. Further, the thickness of each of the panes and the air gap provided may generally be determined based on testing against an approved test such as the UL/ANSI 752 level 1 bullet proof test or the like as may be established from time to time. As long as the window system meets the appropriate standard, embodiments of the multi-pane window system herein may have panes with a thickness of 5mm, 10mm, 20mm, 30mm or any measurement between these. The air gap(s) may be 5mm, 10mm, 15mm, 20mm, 25mm, 30mm or any measurement between these. In some embodiments, in addition to the considerations above, the minimum air gap may be determined by the minimum size needed to allow conditioned air to flow between the panes in order to reduce or prevent fogging or icing.

The use of multiple monolithic panes together with air gaps is also intended to provide some additional benefits. For example, when working with thicker materials, it can be difficult to form the materials into curved or bent shapes. This is particularly true for polycarbonate. By using multiple panes, each pane remains thinner and can still be formed at reasonable cost. For example, a pane of polycarbonate of up to about 15 mm can be curved economically. As such, the use of two panes allows for the polycarbonate to be curved more cost effectively but still provide the level of protection of the thicker single pane that is more difficult/costly to curve. A similar consideration may also apply to the concept of using laminated materials for the window panes because it can be difficult and/or costly to form thicker laminated materials into curved or bent shapes.

In an embodiment of fabricating embodiments of the window system herein, the window panes would first be formed to have a curved shape using known cost effective systems. The panes will then be mounted to provide an air gap between at least two panes.

The above embodiments relate to a multi-pane window system in which an interior pane can be moved to allow cleaning. In other embodiments, the panes may be stationary.

## Claims

1. A protective window system (100) for forestry equipment comprising at least two window panes (120, 125) of transparent polycarbonate material having a thickness between 10 and 20 mm separated by an air gap (135) between 20 and 30 mm, wherein the thickness of each window pane and the size of the air gap is selected such that the window system meets or exceeds UL/ANSI 752 level 1 testing.

2. A protective window system (100) according to claim 1, wherein the at least two window panes (120, 125) comprises a plurality of window panes.

3. A protective window system (100) according to claim 2, wherein the air gap (135) comprises a plurality of air gaps.

4. A protective window system (100) according to any one of claims 1 to 3, further comprising a channel (145) for transporting conditioned air and a vent (150) for allowing the conditioned air to enter the air gap.

5. A protective window system (100) according to any one of claims 1 to 4, further comprising a hinge mechanism (155) for allowing at least one of the at least two window panes to move in relation to another of the at least two window panes.

6. A protective window system (100) according to any one of claims 1 to 5, wherein the thickness of each of the two window panes (120, 125) is 12.7 mm and the air gap (135) is 30 mm.

7. A protective window system (100) according to any one of claims 1 to 6, wherein the meets or exceeds UL/ANSI 752 level 1 testing must be when impacted with chain shot.

8. A method of fabricating a protective window system (100) for forestry equipment, the method comprising:
forming at least two polycarbonate window panes (120, 125) to have a curved shape and a thickness between 10 and 20 mm;
mounting a first pane (120) of the at least two window panes on an exterior of a cab of the forestry equipment;
mounting another pane (125) of the at least two window panes on an interior of the cab; and
providing an air gap (135) between 20 and 30 mm between at least two of the at least two panes,
wherein at least one of the first pane and another pane are configured to rotate away from the other to allow for cleaning and wherein the thickness of each window pane and the size of the air gap is selected within the specified ranges such that the window system meets or exceeds UL/ANSI 752 level 1 testing.

9. A method according to claim 8, wherein the at least two window panes (120, 125) comprises a plurality of window panes.

10. A method according to claim 9, wherein the air gap (135) comprises a plurality of air gaps.

11. A method according to any one of claims 8 to 10, further comprising providing a channel (145) for transporting conditioned air and a vent (150) for allowing the conditioned air to enter the air gap.

12. A protective window system (100) for forestry equipment according to any one of claims 1 to 7, comprising:
said at least two window panes (120, 125) of polycarbonate, formed with a curved shape
a channel (145) for transporting conditioned air and a vent (150) for allowing the conditioned air to enter the air gap; and
a hinge mechanism (155) for allowing at least one of the at least two window panes to move in relation to another of the at least two window panes.

13. A protective window system (100) according to claim 12, wherein the thickness of each of the two window panes (120, 125) is 12.7 mm and the air gap (135) is 30 mm.

14. A protective window system (100) according to any one of claims 12 and 13, wherein the meets or exceeds UL/ANSI 752 level 1 testing must be when impacted with chain shot.

## Patentansprüche

1. Schutzfenstersystem (100) für forstwirtschaftliche Ausrüstung, das mindestens zwei Fensterscheiben (120, 125) aus transparentem Polycarbonatmaterial mit einer Dicke zwischen 10 und 20 mm umfasst, die durch einen Luftspalt (135) zwischen 20 und 30 mm getrennt sind, wobei die Dicke jeder Fensterscheibe und die Größe des Luftspaltes so gewählt ist, dass das Fenstersystem die UL/ANSI 752 Stufe 1 Prüfung erfüllt oder übertrifft.

2. Schutzfenstersystem (100) nach Anspruch 1, wobei die mindestens zwei Fensterscheiben (120, 125) eine Vielzahl von Fensterscheiben umfassen.

3. Schutzfenstersystem (100) nach Anspruch 2, wobei der Luftspalt (135) eine Vielzahl von Luftspalten umfasst.

4. Schutzfenstersystem (100) nach einem der Ansprüche 1 bis 3, das ferner einen Kanal (145) zum Fördern von klimatisierter Luft und eine Entlüftung (150) umfasst, die den Eintritt der klimatisierten Luft in den Luftspalt ermöglicht.

5. Schutzfenstersystem (100) nach einem der Ansprüche 1 bis 4, ferner umfassend einen Gelenkmechanismus (155), der es mindestens einer der mindestens zwei Fensterscheiben ermöglicht, sich in Bezug auf eine andere der mindestens zwei Fensterscheiben zu bewegen.

6. Schutzfenstersystem (100) nach einem der Ansprüche 1 bis 5, wobei die Dicke jeder der beiden Fensterscheiben (120, 125) 12,7 mm und der Luftspalt (135) 30 mm beträgt.

7. Schutzfenstersystem (100) nach einem der Ansprüche 1 bis 6, wobei die Prüfung nach UL/ANSI 752 Stufe 1 erfüllt oder übertroffen werden muss, wenn es mit einem Kettenschuss getroffen wird.

8. Verfahren zur Herstellung eines Schutzfenstersystems (100) für forstwirtschaftliche Ausrüstung, das Verfahren umfassend:
Formen von mindestens zwei Polycarbonatfensterscheiben (120, 125), die eine gekrümmte Form und eine Dicke zwischen 10 und 20 mm aufweisen;
Montieren einer ersten Scheibe (120) der mindestens zwei Fensterscheiben an einer Außenseite einer Kabine der forstwirtschaftlichen Ausrüstung;
Montieren einer weiteren Scheibe (125) der mindestens zwei Fensterscheiben an einer Innenseite des Fahrerhauses; und
Bereitstellen eines Luftspalts (135) zwischen 20 und 30 mm zwischen mindestens zwei der mindestens zwei Scheiben,
wobei mindestens eine der beiden Scheiben so konfiguriert ist, dass sie sich von der anderen Scheibe wegdrehen lässt, um eine Reinigung zu ermöglichen, und wobei die Dicke jeder Scheibe und die Größe des Luftspalts innerhalb der spezifizierten Bereiche so gewählt ist, dass das Fenstersystem die UL/ANSI 752 Stufe 1 Prüfung erfüllt oder übertrifft.

9. Verfahren nach Anspruch 8, wobei die mindestens zwei Fensterscheiben (120, 125) eine Vielzahl von Fensterscheiben umfassen.

10. Verfahren nach Anspruch 9, wobei der Luftspalt (135) eine Vielzahl von Luftspalten umfasst.

11. Verfahren nach einem der Ansprüche 8 bis 10, das ferner das Bereitstellen eines Kanals (145) zum Fördern von klimatisierter Luft und einer Entlüftung (150) umfasst, die den Eintritt der klimatisierten Luft in den Luftspalt ermöglicht.

12. Schutzfenstersystem (100) für forstwirtschaftliche Ausrüstung nach einem der Ansprüche 1 bis 7, umfassend:
die mindestens zwei Fensterscheiben (120, 125) aus Polycarbonat, die gekrümmt geformt sind;
einen Kanal (145) zum Fördern von klimatisierter Luft und eine Entlüftung (150), die den Eintritt der klimatisierten Luft in den Luftspalt ermöglicht; und
einen Gelenkmechanismus (155), der es mindestens einer der mindestens zwei Fensterscheiben ermöglicht, sich in Bezug auf eine andere der mindestens zwei Fensterscheiben zu bewegen.

13. Schutzfenstersystem (100) nach Anspruch 12, wobei die Dicke jeder der beiden Fensterscheiben (120, 125) 12,7 mm und der Luftspalt (135) 30 mm beträgt.

14. Schutzfenstersystem (100) nach einem der Ansprüche 12 und 13, wobei die UL/ANSI 752 Stufe 1 Prüfung erfüllt oder übertroffen werden muss, wenn es mit Kettenschuss getroffen wird.

## Revendications

1. Système de fenêtre de protection (100) pour équipement forestier comprenant au moins deux vitres (120, 125) en polycarbonate transparent d'une épaisseur comprise entre 10 et 20 mm séparées par un espace d'air (135) compris entre 20 et 30 mm, dans lequel l'épaisseur de chaque vitre et la taille de l'espace d'air sont sélectionnées de manière à ce que le système de fenêtre soit conforme ou supérieur au test UL/ANSI 752 de niveau 1.

2. Système de fenêtre de protection (100) selon la revendication 1, dans lequel les au moins deux vitres (120, 125) comprennent une pluralité de vitres.

3. Système de fenêtre de protection (100) selon la revendication 2, dans lequel l'espace d'air (135) comprend plusieurs espaces d'air.

4. Système de fenêtre de protection (100) selon l'une des revendications 1 à 3, comprenant en outre un canal (145) pour transporter l'air conditionné et un évent (150) pour permettre à l'air conditionné de pénétrer dans l'espace d'air.

5. Système de fenêtre de protection (100) selon l'une des revendications 1 à 4, comprenant en outre un mécanisme de charnière (155) permettant à au moins l'une au moins des deux vitres de se déplacer par rapport à une autre des deux vitres au moins.

6. Système de fenêtre de protection (100) selon l'une des revendications 1 à 5, dans lequel l'épaisseur de chacune des deux vitres (120, 125) est de 12,7 mm et l'espace d'air (135) est de 30 mm.

7. Système de fenêtre de protection (100) selon l'une des revendications 1 à 6, dans laquelle système est conforme ou supérieur au test UL/ANSI 752 de niveau 1 en cas d'impact avec un tir de chaîne.

8. Procédé de fabrication d'un système de fenêtre de protection (100) pour un équipement forestier, le procédé comprenant :
la formation d'au moins deux vitres en polycarbonate (120, 125) pour avoir une forme incurvée et une épaisseur comprise entre 10 et 20 mm ;
le montage d'une première vitre (120) des au moins deux vitres sur l'extérieur d'une cabine de l'équipement forestier ;
le montage d'une autre vitre (125) des au moins deux vitres à l'intérieur de la cabine ; et
la fourniture d'un espace d'air (135) compris entre 20 et 30 mm entre au moins deux des au moins deux vitres,
dans lequel au moins l'une des premières vitres et l'autre vitre sont conçues pour pivoter l'une par rapport à l'autre afin de permettre le nettoyage et dans lequel l'épaisseur de chaque vitre et la taille de l'espace d'air sont sélectionnées dans les plages spécifiées de manière à ce que le système de fenêtre soit conforme ou supérieur au test UL/ANSI 752 de niveau 1.

9. Procédé selon la revendication 8, dans lequel les au moins deux vitres (120, 125) comprennent une pluralité de vitres.

10. Procédé selon la revendication 9, dans lequel l'espace d'air (135) comprend plusieurs espaces d'air.

11. Procédé selon l'une des revendications 8 à 10, comprenant en outre un canal (145) pour transporter l'air conditionné et un évent (150) afin de permettre à l'air conditionné de pénétrer dans l'espace d'air.

12. Système de fenêtre de protection (100) pour équipement forestier selon l'une des revendications 1 à 7, comprenant :
lesdites au moins deux vitres (120, 125) en polycarbonate, de forme incurvée ;
un canal (145) pour transporter l'air conditionné et un évent (150) pour permettre à l'air conditionné de pénétrer dans l'espace d'air ; et
un mécanisme de charnière (155) permettant à au moins une des deux vitres au moins de se déplacer par rapport à une autre des deux vitres au moins.

13. Système de fenêtre de protection (100) selon la revendication 12, dans lequel l'épaisseur de chacune des deux vitres (120, 125) est de 12,7 mm et l'espace d'air (135) est de 30 mm.

14. Système de fenêtre de protection (100) selon l'une des revendications 12 et 13, dans lequel le test UL/ANSI 752 de niveau 1 doit être atteint ou dépassé en cas d'impact avec un tir de chaîne.
